# EUROPEAN PATENT APPLICATION

(11) **EP 4 431 483 A1**
(43) Date of publication of application: **18.09.2024**
(21) Application number: 24163839.4
(22) Date of filing: 15.03.2024
(51) Int. Cl.: C04B 35/628, C04B 35/634, C04B 35/80

(54) **THREE DIMENSIONAL WEAVE WITH SACRIFICAL Z-FIBERS FOR IMPROVED CERAMIC MATRIX COMPOSITE MICROSTRUCTURE**

(30) Priority: 17.03.2023 US 202318123040
(71) Applicant: RTX Corporation, Farmington, CT 06032 (US)
(72) Inventor: LENZ, Brendan, East Hartford, 06118 (US); SUDRE, Olivier H., East Hartford, 06118 (US)
(74) Representative: Dehns

(57) **Abstract**

A method of forming a ceramic matrix composite includes three-dimensionally weaving a fibrous preform, the preform including a plurality of warp tows, a plurality of weft tows, and a plurality of z-fibers passing orthogonally between the plurality of warp and the plurality of weft tows. The method further includes debulking the preform, decomposing the plurality of z-fibers to form a respective plurality of z-channels in the preform, and densifying the preform with a ceramic matrix.

## Description

### BACKGROUND

The present invention relates to ceramic matrix composites (CMCs), and more particularly, to the preparation of woven ceramic fabrics for use in CMCs.

In the processing of CMCs, there is a need to infiltrate matrix within and around fibrous tows to replace pore volume with dense matrix material. Various manufacturing challenges exist leading to high porosity in two-dimensional woven systems, and/or suboptimal fiber volume fraction in three-dimensional woven systems that can cause diminished deposition rates of reactant gases, leading to poor composite properties. Thus, a need exists for means to facilitate even matrix infiltration.

### SUMMARY

A method of forming a ceramic matrix composite includes three-dimensionally weaving a fibrous preform, the preform including a plurality of warp tows, a plurality of weft tows, and a plurality of z-fibers passing orthogonally between the plurality of warp and the plurality of weft tows. The method further includes debulking the preform, decomposing the plurality of z-fibers to form a respective plurality of z-channels in the preform, and densifying the preform with a ceramic matrix.

A method of forming a ceramic matrix composite includes three-dimensionally weaving a fibrous preform by laying a plurality of warp tows, laying a plurality of weft tows, and weaving a plurality of z-fibers orthogonally between the plurality of warp tows and the plurality of weft tows. The method further includes subsequently, debulking the preform, subsequently, decomposing the plurality of z-fibers to form a respective plurality of z-channels in the preform, and subsequently, depositing an interface coating on the preform.

Features of embodiments are set forth in the dependent claims.

### BRIEF DESCRIPTION OF THE DRAWINGS

FIG. 1 is a flowchart illustrating a method of forming a CMC using sacrificial z-fibers.
FIG. 2 is a simplified cross-sectional view of a preform showing a sacrificial z-fiber.
FIG. 3 is a simplified cross-sectional view of the preform after removal of the sacrificial z-fiber.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

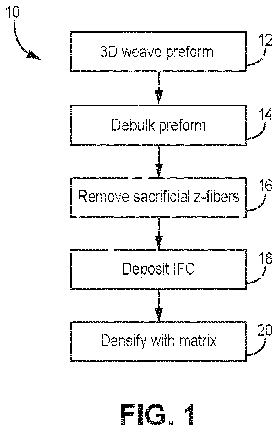

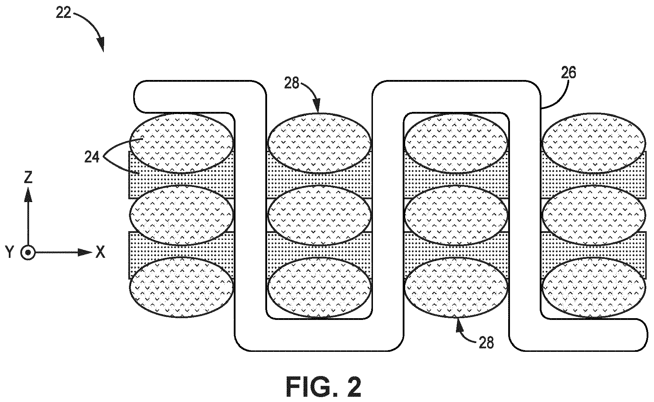

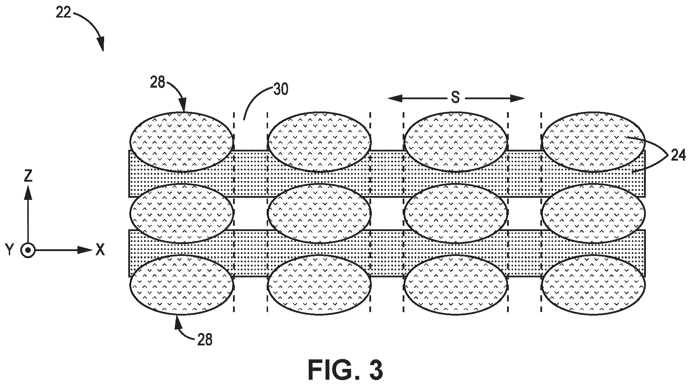

This disclosure presents a method for forming z-channels in a fibrous ceramic preform by three-dimensionally weaving sacrificial z-fibers into the preform. FIG. 1 is a flowchart illustrating select steps of method 10 for forming a CMC from a preform with interwoven sacrificial z-fibers. FIGS. 2 and 3 are simplified cross-sectional views of a portion of a preform with a sacrificial z-fiber, and after z-fiber removal, respectively. Method 10 is discussed together with FIGS. 1, 2, and 3.

At step 12, preform 22 can be formed via three-dimensional (e.g., Jacquard) weaving with ceramic tows 24 with sacrificial z-fibers 26 (only one is shown in FIG. 2). More specifically, warp and weft tows 24 are disposed along the x-y plane, and sacrificial z-fibers 26 are disposed primarily orthogonally to the x-y plane along the z-axis with small segments extending, for example, along the x-axis. As shown in FIG. 2, preform 22 can represent a planar component of one, two, or three-dimensional layers, or a portion of a more complexly-shaped, multidimensional component, being at least partially formed via three-dimensional weaving. Tows 24 can be formed from bundles of silicon carbide (SiC) fibers in an exemplary embodiment, although other suitable ceramic materials are contemplated herein. Tows 24 can be sized with a polymer binder, such as polyvinyl alcohol (PVA) with water, or polyvinyl butyral (PVB) with ethanol. Z-fibers 26 can be formed from a polymer material, such as PVA, in one embodiment. Polymer z-fibers 26 can be formed as continuous structures, similar to serving yarns, via extrusion or other suitable processes. Alternatively, z-fibers 26 can be formed from a carbon fiber material. In general, z-fibers 26 will extend through the entire thickness (i.e., between opposing surfaces 28) of preform 22. Each z-fiber 26 will generally have a fiber diameter that is less than or equal to the diameter of an individual tow 24.

At step 14, preform 22 can be debulked using one or a combination of vacuum and mechanical pressure to compress perform 22. Heat can also be applied along with pressure to help accelerate the removal of any binder solvent (e.g., water or ethanol) in preform 22. The polymer from the binder remains in preform 22 to help retain the compressed state of tows 24 during subsequent processing.

At step 16, z-fibers 26 can be removed from preform 22. In one example, z-fibers 26 can be thermally decomposed by heating preform 22 to a temperature ranging from about 400°C to 800°C in the presence of oxygen (e.g., from air) or nitrogen (N₂). Such thermal decomposition can be caried out in the CVI reactor such that deposition of an interface coating (see step 18 below) can immediately follow. Alternatively, z-fibers 26 can be decomposed in a boiling water bath with optional ultrasonication while preform 22 is lightly compressed in a tooling fixture. In some embodiments, it can be preferable to remove z-fibers 26 prior to debulking, such that step 16 precedes step 14. For example, carbon fiber z-fibers 26 may resist compressive force more than polymer z-fibers 26, and as such, the prior removal of carbon fiber z-fibers 26 can allow for a desired degree of debulking.

As shown in FIG. 3, the removal of z-fibers 26 reveals z-channels 30 (represented by dashed lines) within preform 22. Each z-channel 30 generally extends through the entire thickness of preform 22 between opposing (i.e., inner and outer) surfaces 28. Each z-channel 30 can have a generally cylindrical geometry corresponding to a geometry of a respective z-fiber 26. Each z-channel 30 can be spaced apart from an adjacent z-channel 30 a distance S, as measured between axial (i.e., z-axis) center points. Distance S can be generally uniform across a given area of preform 22. Depending on the z-fiber 26 weave pattern, distance S can range from 0.045 in (1.14 mm) to 0.25 in (6.35 mm). Accordingly, formation of z-channels 30 using z-fibers 26 can permit tighter spacing (i.e., more z-channels 30 in a given area) versus mechanical punching/cutting techniques because of the ability to weave z-fibers 26 in various patterns, and because mechanical means tend to damage tows 24 and compromise preform 22 integrity.

At step 18, any desired interface coating (IFC) layers, such as boron nitride (BN), silicon-doped boron nitride (Si-BN), silicon nitride (Si₃N₄), SiC, carbon, etc. can be deposited on preform 22 using CVI.

At step 20, preform 22 can be densified with a ceramic (e.g., SiC) matrix. CVI can be used to infiltrate the preform with reactant vapors, and the process can be carried out until the resulting CMC has reached the desired residual porosity. Z-channels 30 provide a straight path for reactant vapors into the thickness of preform 22 allowing densification in a direction from the midplane (i.e., mid-thickness) out (i.e., to either surface 28). This results in a denser, more uniform matrix. Other techniques for matrix formation are contemplated herein, such as one or a combination of slurry infiltration, melt infiltration, and polymer infiltration and pyrolysis. Such techniques can supplement or precede the CVI process. Protective coatings for the CMC (e.g., thermal barrier coatings, environmental barrier coatings, etc.) can optionally be applied after step 20.

In an alternative embodiment, at least some, if not all z-fibers can be woven into the preform such that they do not extend entirely through the preform thickness. Accordingly, the resulting z-channels will only extend partially through the preform thickness.

A CMC component formed with the disclosed preforms can be incorporated into aerospace, maritime, or industrial equipment, to name a few, non-limiting examples.

### Discussion of Possible Embodiments

The following are non-exclusive descriptions of possible embodiments of the present invention.

A method of forming a ceramic matrix composite includes three-dimensionally weaving a fibrous preform, the preform including a plurality of warp tows, a plurality of weft tows, and a plurality of z-fibers passing orthogonally between the plurality of warp and the plurality of weft tows. The method further includes debulking the preform, decomposing the plurality of z-fibers to form a respective plurality of z-channels in the preform, and densifying the preform with a ceramic matrix.

The method of the preceding paragraph can optionally include, additionally and/or alternatively, any one or more of the following features, configurations and/or additional components:
In the above method, each of the plurality of warp tows and weft tows can be formed from silicon carbide.

In any of the above methods, each of the plurality of z-fibers can be formed from one of a polymer material, and a carbon fiber material.

In any of the above methods, the polymer material can include polyvinyl alcohol.

In any of the above methods, the step of debulking the preform can include applying at least one of pressure and heat to the preform.

In any of the above methods, the step of decomposing the plurality of z-fibers cand include heating the preform to a temperature ranging from 400°C to 800°C in the presence of oxygen or nitrogen.

In any of the above methods, the step of decomposing the plurality of z-fibers can include placing the preform in a boiling water bath.

In any of the above methods, each z-channel can be spaced apart from an adjacent z-channel a uniform distance ranging from 0.045 in (1.14 mm) to 0.25 in (6.35 mm).

Any of the above methods can further include after decomposing the plurality of z-fibers, applying an interface coating on the preform using chemical vapor infiltration.

In any of the above methods, the interface coating can include at least one of boron nitride, silicon-doped boron nitride, silicon nitride, silicon carbide, and carbon.

In any of the above methods, the step of densifying the preform can be carried out using chemical vapor infiltration.

A method of forming a ceramic matrix composite includes three-dimensionally weaving a fibrous preform by laying a plurality of warp tows, laying a plurality of weft tows, and weaving a plurality of z-fibers orthogonally between the plurality of warp tows and the plurality of weft tows. The method further includes subsequently, debulking the preform, subsequently, decomposing the plurality of z-fibers to form a respective plurality of z-channels in the preform, and subsequently, depositing an interface coating on the preform.

The method of the preceding paragraph can optionally include, additionally and/or alternatively, any one or more of the following features, configurations and/or additional components:
The above method can further include densifying the preform with a ceramic matrix using chemical vapor infiltration.

In any of the above methods, each of the plurality of warp tows and weft tows can be formed from silicon carbide.

In any of the above methods, each of the plurality of z-fibers can be formed from one of a polymer material, and a carbon fiber material.

In any of the above methods, the polymer material can include polyvinyl alcohol.

In any of the above methods, the step of debulking the preform can include applying at least one of pressure and heat to the preform.

In any of the above methods, the step of decomposing the plurality of z-fibers can include heating the preform to a temperature ranging from 400°C to 800°C in the presence of oxygen or nitrogen.

In any of the above methods, the step of decomposing the plurality of z-fibers can include placing the preform in a boiling water bath.

In any of the above methods, each z-channel can be spaced apart from an adjacent z-channel a uniform distance ranging from 0.045 in (1.14 mm) to 0.25 in (6.35 mm).

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a ceramic matrix composite, the method comprising:
three-dimensionally weaving a fibrous preform (22), the preform (22) comprising:
a plurality of warp tows (24);
a plurality of weft tows (24); and
a plurality of z-fibers (26) passing orthogonally between the plurality of warp tows (24) and the plurality of weft tows (24);
debulking the preform (22);
decomposing the plurality of z-fibers (26) to form a respective plurality of z-channels (30) in the preform (22); and
densifying the preform (22) with a ceramic matrix.

2. The method of claim 1 and further comprising: after decomposing the plurality of z-fibers (26), applying an interface coating on the preform (22) using chemical vapor infiltration.

3. The method of claim 2, wherein the interface coating comprises at least one of boron nitride, silicon-doped boron nitride, silicon nitride, silicon carbide, and carbon.

4. The method of any of claims 1 to 3, wherein the step of densifying the preform (22) is carried out using chemical vapor infiltration.

5. A method of forming a ceramic matrix composite, the method comprising:
three-dimensionally weaving a fibrous preform (22) by:
laying a plurality of warp tows (24);
laying a plurality of weft tows (24); and
weaving a plurality of z-fibers (26) orthogonally between the plurality of warp tows (24) and the plurality of weft tows (24);
subsequently, debulking the preform (22);
subsequently, decomposing the plurality of z-fibers (26) to form a respective plurality of z-channels (30) in the preform (22); and
subsequently, depositing an interface coating on the preform (22).

6. The method of claim 5 and further comprising: densifying the preform (22) with a ceramic matrix using chemical vapor infiltration.

7. The method of any preceding claim, wherein each of the plurality of warp tows (24) and weft tows (24) is formed from silicon carbide.

8. The method of any preceding claim, wherein each of the plurality of z-fibers (26) is formed from one of a polymer material, and a carbon fiber material.

9. The method of claim 8, wherein the polymer material comprises polyvinyl alcohol.

10. The method of any preceding claim, wherein the step of debulking the preform (22) comprises applying at least one of pressure and heat to the preform (22).

11. The method of any preceding claim, wherein the step of decomposing the plurality of z-fibers (26) comprises heating the preform (22) to a temperature ranging from 400°C to 800°C in the presence of oxygen or nitrogen.

12. The method of any of claims 1 to 10, wherein the step of decomposing the plurality of z-fibers (26) comprises placing the preform (22) in a boiling water bath.

13. The method of any preceding claim, wherein each z-channel (30) is spaced apart from an adjacent z-channel a uniform distance (S) ranging from 0.045 in (1.14 mm) to 0.25 in (6.35 mm).
